# FASCICULE DE BREVET EUROPEEN

(11) **EP 3 159 224 B1**
(45) Date de publication et mention de la délivrance du brevet: **23.01.2019**
(21) Numéro de dépôt: 16193132.4
(22) Date de dépôt: 10.10.2016
(51) Int. Cl.: B60S 1/40, B60S 1/38

(54) **DISPOSITIF DE CONNEXION INTERPOSÉ ENTRE UN BRAS DE MANOEUVRE ET UN BALAI D'ESSUYAGE D'UNE SURFACE VITRÉE DE VÉHICULE**
VERBINDUNGSVORRICHTUNG, DIE ZWISCHEN EINEM BETÄTIGUNGSARM UND EINEM SCHEIBENWISCHERARM EINER GLASOBERFLÄCHE EINES KRAFTFAHRZEUGS POSITIONIERT IST
CONNECTING DEVICE INTERPOSED BETWEEN AN OPERATING ARM AND A WIPER FOR A VEHICLE GLAZED SURFACE

(30) Priorité: 22.10.2015 FR 1560058
(43) Date de publication de la demande: 26.04.2017
(73) Titulaire: Valeo Systèmes d'Essuyage, 78322 Le Mesnil Saint Denis (FR)
(72) Inventeur: HANINO, Marie-Therese, 63270 Parent (FR); MONEYRON, Patrick, 63670 LE CENDRE (FR); ESPINASSE, Philippe, 63114 COUDES (FR)
(74) Mandataire: Vincent, Catherine Marie Marguerite

(56) Documents cités:
- EP-A1- 0 053 960
- EP-A2- 2 769 889
- US-A1- 2004 093 681
- US-A1- 2013 185 889

## Description

Le domaine de la présente invention est celui des systèmes d'essuyage destinés à équiper un véhicule automobile. Elle a pour objet un dispositif de connexion interposé entre un bras de manoeuvre et un balai d'essuyage d'une surface vitrée du véhicule. Elle a aussi pour objet un balai d'essuyage équipé d'un tel dispositif de connexion. Elle a encore pour objet un système d'essuyage comprenant un tel balai d'essuyage et un bras pour la manoeuvre d'un tel balai, reliés par un dispositif de connexion.

Les véhicules automobiles sont couramment équipés d'un système d'essuyage pour assurer un balayage et un lavage d'un pare-brise et éviter que la vision qu'a le conducteur de son environnement ne soit perturbée. Ce système d'essuyage comprend un bras de manoeuvre qui est porteur d'un balai d'essuyage et qui effectue un mouvement de va-et-vient angulaire le long du pare-brise. Le balai d'essuyage est porteur d'une lame racleuse réalisée en une matière élastique. La lame racleuse frotte contre le pare-brise et évacue l'eau en l'amenant en dehors du champ de vision du conducteur. Le balai d'essuyage est réalisé sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai d'essuyage est rattaché au bras de manoeuvre par un dispositif de connexion interposé entre le bras de manoeuvre et le balai d'essuyage.

Le document FR 2841852 A1 décrit un dispositif de connexion du genre susvisé qui s'avère complexe, fragile et peu fiable. De plus, un tel dispositif de connexion comprend un nombre important de pièces qu'il est souhaitable de réduire le plus possible. Enfin, un tel dispositif de connexion n'est pas adapté pour être aisément monté sur une gamme de véhicules automobiles comportant indifféremment une direction à droite ou bien une direction à gauche, c'est-à-dire un véhicule automobile dont un volant de direction est indifféremment installé d'un côté droit ou bien d'un côté gauche du véhicule automobile. Or, pour des raisons de production, de référencement et/ou de stockage, il est souhaitable de disposer d'un balai d'essuyage dont le montage est indifféremment possible sur un véhicule automobile comportant une direction à droite ou bien une direction à gauche, ce que ne prévoit pas le balai d'essuyage décrit par le document FR 2841852 A1. EP-A-2769889 montre le préambule de la revendication 1.

Un but de la présente invention est de proposer un dispositif de connexion destiné à être interposé entre un bras de manoeuvre et un balai d'essuyage d'une surface vitrée du véhicule automobile, le dispositif de connexion étant simple, peu encombrant et comportant un nombre de pièces qui est le plus réduit possible, le dispositif de connexion étant aisément assemblable sur un véhicule automobile comportant indifféremment une direction à droite ou bien une direction à gauche, pour offrir une visibilité optimisée à un conducteur du véhicule automobile.

Selon la présente invention, le dispositif de connexion est destiné à être interposé entre un bras de manoeuvre et un balai d'essuyage d'une surface vitrée d'un véhicule, comprenant une pièce de maintien solidaire du balai d'essuyage et une pièce intermédiaire apte à être rapportée sur une partie de connexion du bras de manoeuvre. La pièce de maintien s'étend dans une première zone et une deuxième zone délimitées par un plan transversal de la pièce de maintien. La pièce intermédiaire comprend une première portion et une deuxième portion, la première portion étant pourvue d'un canal apte à recevoir un doigt que comporte la partie de connexion. Le dispositif de connexion comprend au moins un moyen de fixation de la pièce intermédiaire sur la pièce de maintien configuré pour disposer le canal soit dans la première zone, soit dans la deuxième zone.

Le dispositif de connexion comporte avantageusement les caractéristiques suivantes prises seules ou en combinaison :
- la deuxième portion est disposée dans la zone de la pièce de maintien qui est opposée à la zone dans laquelle est disposé le canal,
- la première portion et la deuxième portion sont disposées dans la même zone de la pièce de maintien,
- la première portion est plus proche du plan transversal que la deuxième portion, selon une direction longitudinal de la pièce de maintien,

- la première portion est plus éloignée du plan transversal que la deuxième portion, selon une direction longitudinal de la pièce de maintien,
- le plan transversal est un plan transversal médian de la pièce de maintien,
- la pièce intermédiaire comprend un plateau sur lequel est ménagé le moyen de fixation,
- le canal comporte une première ouverture qui équipe une première face latérale de la pièce intermédiaire et le canal comporte une deuxième ouverture qui équipe une deuxième face latérale de la pièce intermédiaire,
- la première face latérale et la deuxième face latérale sont parallèles l'une à l'autre et parallèles à une direction longitudinal selon lequel le plateau s'étend,
- la première face latérale et la deuxième face latérale sont orthogonales à un plan de plateau dans lequel le plateau s'étend,
- le moyen de fixation comprend une pluralité d'organes complémentaires d'emboîtement,
- le moyen de fixation comprend au moins un jeu d'organes d'emboîtement équipant le plateau pour la réception d'un jeu d'organes d'emboîtement complémentaires équipant la pièce intermédiaire,
- le moyen de fixation comprend un jeu d'organes d'emboîtement délimitant une zone de réception de la pièce intermédiaire sur la pièce de maintien,
- le moyen de fixation comprend deux jeux d'organes d'emboîtement délimitant deux zones de réception de la pièce intermédiaire,
- les deux zones de réception sont avantageusement distinctes, c'est-à-dire sans recouvrement. Alternativement, les deux zones de réception peuvent se chevaucher l'une sur l'autre, pour autant qu'elles ne se superposent pas intégralement,
- le jeu d'organes d'emboitement est constitué d'une pluralité de cavités tandis que le jeu d'organes d'emboîtement complémentaires est constitué d'une pluralité de griffes, qui se logent dans les cavités,
- Selon un exemple de réalisation, les cavités sont ménagées dans la pièce de maintien, alors que les griffes sont issues de la pièce intermédiaire,
- le moyen de fixation comprend une platine équipant le, ou émergeant du, plateau et une rainure ménagée dans la pièce intermédiaire, ladite platines étant prévue pour s'imbriquer à l'intérieur de la rainure,
- la platine est ménagée selon un plan de platine qui est orthogonal à un plan de plateau dans lequel le plateau s'étend,
- la rainure est ménagée selon un plan de rainure qui est orthogonal au plan médian de la pièce intermédiaire et qui est sécant par rapport au canal,
- le plan de rainure est orthogonal au plan médian de la pièce intermédiaire,
- la platine est pourvue d'un logement, notamment de section circulaire,
- le logement est ménagé au centre de la pièce de maintien,
- le logement et le canal sont conformés en un cylindre d'un diamètre qui est égal à un diamètre du doigt,
- le plateau est bordé de deux rebords latéraux qui sont ménagés parallèlement à la direction longitudinale de la pièce de maintien,
- chaque extrémité de la pièce de maintien est munie d'un capot apte à couvrir une extrémité d'un déflecteur d'air du balai d'essuyage.

L'invention porte également sur un balai d'essuyage équipé d'un tel dispositif de connexion.

L'invention porte également sur système d'essuyage comprenant le balai d'essuyage tel qu'évoqué ci-dessus et un bras de manoeuvre pourvu d'une partie de connexion, ladite partie de connexion comprenant un corps équipé d'un doigt et d'une broche qui sont ménagés parallèlement entre eux et qui s'étendent selon une direction transversale, le doigt étant logé dans le canal alors que la broche est en appui contre une face latérale délimitant la pièce intermédiaire.

Ces dispositions sont telles que le dispositif de connexion est standardisé pour une pluralité de véhicules différents. Le dispositif de connexion est également simple, peu encombrant et comporte un nombre de pièces qui est le plus réduit possible. Le même dispositif de connexion est aisément assemblable sur un véhicule automobile comportant indifféremment une direction à droite ou bien une direction à gauche, pour offrir une visibilité optimisée à un conducteur du véhicule automobile.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue partielle, en perspective, du système d'essuyage illustré sur la figure 1 et comprenant un dispositif de connexion selon l'invention,
- la figure 3 est une vue en perspective d'une partie de connexion d'un bras de manoeuvre sur laquelle le dispositif de connexion selon l'invention se monte,
- la figure 4 est une vue en perspective d'une variante de réalisation d'une pièce de maintien constitutive du dispositif de connexion illustré sur la figure 2,
- les figures 5 et 6 sont des illustrations de formes d'utilisation de la pièce de maintien illustrée sur la figure 4,
- la figure 7 est une vue en perspective d'une autre variante de réalisation de la pièce de maintien constitutive du dispositif de connexion illustré sur la figure 2,
- les figures 8 à 11 sont des illustrations de formes d'utilisation de la pièce de maintien illustrée sur la figure 7,
- la figure 12 est une vue en perspective d'une pièce intermédiaire constitutive du dispositif de connexion représenté sur les figures 5 à 11,
- la figure 13 est une vue en perspective d'une autre variante de réalisation de la pièce de maintien constitutive du dispositif de connexion illustré sur la figure 2,
- les figures 14 et 15 sont des illustrations de formes d'utilisation de la pièce de maintien illustrée sur la figure 13,
- la figure 16 est une vue en perspective de la pièce intermédiaire représentée sur les figures 14 à 15.

Il faut tout d'abord noter que les figures exposent l'invention de manière détaillée pour mettre en oeuvre l'invention, lesdites figures pouvant bien entendu servir à mieux définir l'invention, le cas échéant.

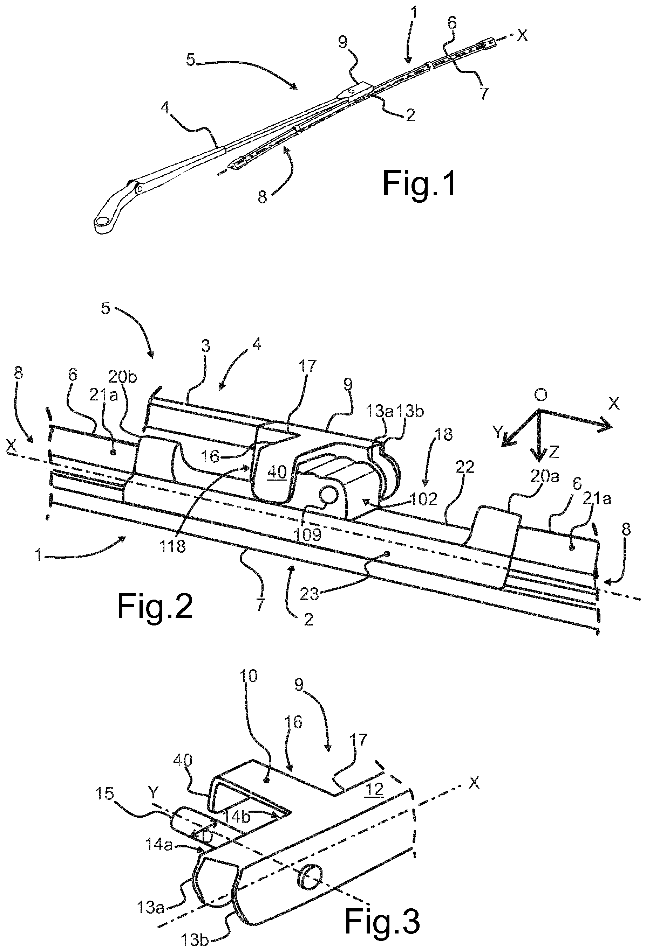

Sur les figures 1 et 2, les dénominations longitudinales ou transversales, dessus, dessous, devant, derrière se réfèrent à l'orientation d'un balai d'essuyage 1 et/ou d'un dispositif de connexion 2 selon l'invention. La direction longitudinale X correspond à un axe principal selon lequel s'étend une pièce de maintien, et le balai d'essuyage 1 quand la pièce de maintien est solidaire de ce balai d'essuyage 1. Les orientations transversales correspondent à des droites concourantes, c'est-à-dire qui croisent la direction longitudinale X, en étant notamment perpendiculaires à la direction longitudinale X de la pièce de maintien. Pour les directions longitudinales, les dénominations extérieure ou intérieure s'apprécient par rapport à un point de pivotement du balai d'essuyage 1 sur un bras de manoeuvre 4 du balai d'essuyage 1, la dénomination intérieure correspondant à la partie où le bras de manoeuvre 4 et un demi-balai s'étendent. Enfin, les directions référencées comme supérieures ou inférieures correspondent à des orientations perpendiculaires à un plan de balayage du balai d'essuyage 1, la dénomination inférieure contenant le plan d'une surface vitrée, notamment un pare-brise.

La direction longitudinale X correspond à un axe Ox d'un repère orthonormé Oxyz représenté sur la figure 2 et la direction transversale Y correspond à une direction Oy dudit repère.

Sur la figure 1, un véhicule automobile est couramment équipé d'un système d'essuyage 5 pour évacuer une eau et/ou des salissures présentes sur un pare-brise du véhicule automobile. Le système d'essuyage 5 comprend le bras de manoeuvre 4 qui est apte à effectuer un mouvement de va-et-vient angulaire le long et au-dessus du pare-brise. Le pare-brise est indifféremment un pare-brise avant ou une lunette arrière équipant le véhicule automobile, et l'invention s'applique plus globalement à une surface vitrée du véhicule. Le dispositif de connexion 2 de la présente invention est avantageusement adaptable à un véhicule automobile dont la direction est indifféremment à droite ou à gauche, tout en procurant une visibilité optimisée au conducteur du véhicule automobile.

Le balai d'essuyage 1 est équipé du dispositif de connexion 2 qui assure une liaison mécanique entre le bras de manoeuvre 4 et le balai d'essuyage 1 et permet ainsi de séparer le balai d'essuyage 1 du bras de manoeuvre 4, en vue d'un remplacement du balai d'essuyage 1.

Le balai d'essuyage 1 comprend au moins un déflecteur d'air 6 et une lame racleuse 7. Le déflecteur d'air 6 est prévu pour transformer une pression appliquée par un flux d'air circulant le long du pare-brise en une force d'appui du balai d'essuyage 1 contre le pare-brise du véhicule automobile. La lame racleuse 7 est la pièce du balai d'essuyage 1 en contact direct avec le pare-brise pour évacuer l'eau et/ou les salissures présentes sur ce dernier. Le déflecteur d'air 6, la lame racleuse 7 et un ou plusieurs éléments de structure forment un ensemble semi-rigide 8 qui est porté par le dispositif de connexion 2. Selon un mode de réalisation, ces éléments de structure sont deux bandes métalliques souples, installées de manière coplanaire chacune dans une gorge longitudinale d'un talon que la lame racleuse 7 comporte. Selon un autre mode de réalisation, ces éléments de structure sont une unique bande métallique souple sur laquelle la pièce de maintien est solidarisée. Cette unique bande métallique souple peut être logée dans une pièce de support plastique, la pièce de support étant multifonctions en ce sens qu'elle est configurée pour s'accrocher de manière amovible avec le déflecteur d'air 6 et/ou avec la lame racleuse 7, notamment par le biais de griffes délimitant un rail dans lequel se loge un talon de la lame racleuse 7. Selon une autre variante de réalisation, la lame racleuse 7 est solidarisée par un adhésif ou un collage directement contre une face de la vertèbre unique.

En se reportant également sur la figure 2, le bras de manoeuvre 4 entraîne en rotation le balai d'essuyage 1 le long du pare-brise. Un tel bras de manoeuvre 4 comprend une partie de connexion 9 qui peut notamment être rapportée à une extrémité d'une tige 3 constitutive du bras de manoeuvre 4. La partie de connexion 9 peut comprendre un corps 12 au bout duquel sont ménagées deux ailettes 13a, 13b, parallèles l'une à l'autre et qui s'étendent dans le prolongement du corps 12.

En se reportant sur la figure 3, une première ailette 13a comporte une première face 14a et le corps 12 comporte une deuxième face 14b, la première face 14a et la deuxième face 14b étant ménagées parallèlement l'une à l'autre. Plus particulièrement, la première face 14a et la deuxième face 14b sont ménagées dans le prolongement l'une de l'autre et parallèlement à la direction longitudinale X.

On constate que la partie de connexion 9 comprend un doigt 15 et une broche 16 qui sont ménagés selon une direction parallèle à la direction transversale Y, c'est-à-dire transversale et perpendiculaire à la direction longitudinale X. Le doigt 15 est notamment conformé en un cylindre d'un diamètre D. La broche 16 s'étend perpendiculairement à une arête supérieure 17 du corps 12, et dans le plan d'une face supérieure délimitant le corps 12. La broche 16 comprend une patte 10 et une languette 40, cette dernière s'étendant dans un plan perpendiculaire, ou sensiblement perpendiculaire, à un plan passant par la patte 10. La languette 40, visible sur les figures 2 ou 3, est ménagée sensiblement parallèlement à la deuxième face 14b.

Tel que représenté sur la figure 2, le dispositif de connexion 2 comprend la pièce de maintien référencée 18 qui est configurée pour porter le balai d'essuyage 1, et notamment le déflecteur d'air 6, la lame racleuse 7 et des éléments de structure du balai lui conférant un profil longitudinal courbé, ainsi qu'une flexibilité. Le dispositif de connexion 2 comprend également une pièce intermédiaire 102, en ce sens qu'elle est disposée entre le bras de manoeuvre 4 et la pièce de maintien 18 et assure la liaison mécanique entre ces deux composants. Cette pièce intermédiaire 102 est susceptible de prendre plusieurs positions sur la pièce de maintien 18.

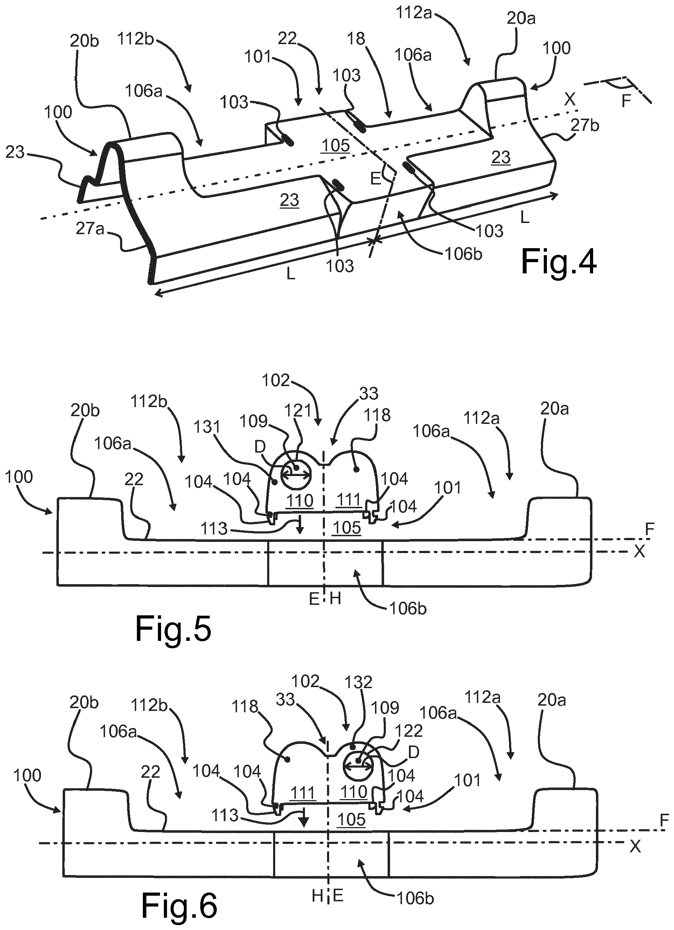

Sur la figure 4, la pièce de maintien 18 est agencée en une baguette qui s'étend selon la direction longitudinale X. Chaque extrémité de la pièce de maintien 18 est munie d'un capot 20a, 20b de couverture d'une extrémité du déflecteur d'air 6. Autrement dit et comme visible sur la figure 2, la baguette est pourvue d'un premier capot 20a qui coiffe une extrémité d'une aile supérieure 21a du déflecteur d'air 6 et d'un deuxième capot 20b qui coiffe une extrémité d'une aile inférieure 21b du déflecteur d'air 6. A cet effet, chaque capot 20a, 20b délimite une gorge 100 pour la réception de l'aile 21a, 21b que comprend le déflecteur d'air 6. On note que la pièce de maintien 18 couvre également une portion d'assemblage du déflecteur d'air 6, située sous les ailes 21a ou 21b. On peut également mentionner que, en plus de couvrir les ailes 21a ou 21b, les capots 20a, 20b présentent une section parfaitement complémentaire de la section de l'aile qu'il couvre, limitant ainsi les perturbations aérauliques générées par des espaces entre les pièces. Selon l'exemple de réalisation de la figure 4, les capots 20a et 20b sont délimités chacun par un sommet qui est décalé transversalement par rapport à un plan médian longitudinal partageant la pièce de maintien 18. Alternativement, ces sommets peuvent s'inscrire dans ce plan longitudinal médian.

Le déflecteur d'air 6 du balai d'essuyage 1 peut être formé d'une pluralité de sous-déflecteurs distincts et rapportés de part et d'autre de la pièce de maintien 18. Alternativement ce déflecteur d'air 6 peut être monobloc et constitué d'une seule et unique pièce qui s'étend d'une extrémité à l'autre du balai d'essuyage. Dans une telle situation, le déflecteur d'air 6 peut présenter une découpe dans laquelle se loge la pièce de maintien 18.

La pièce de maintien 18 comprend un plateau 22 qui est terminé longitudinalement par les deux capots référencés 20a et 20b. Deux rebords latéraux 23 sont ménagés de part et d'autre du plateau 22. Ce plateau 22 s'étend selon un plan de plateau F qui est parallèle à la direction longitudinale X et parallèle à un plan dans lequel s'étendent les éléments de structures du balai d'essuyage 1. En section, le plateau 22 st ses rebords latéraux 23 présente une forme sensiblement en « U », une partie des éléments de structure du balai d'essuyage 1 étant logée dans cette forme en « U ».

Un plan transversal E sépare la pièce de maintien 18 en deux zones 112a, 112b. Dans un exemple de réalisation, ce plan transversal E est médian et délimite ainsi une première zone 112a et une deuxième zone 112b, zones dans lesquelles une demi-pièce de maintien s'étend. Ces demi-pièces de maintien sont d'une égale longueur L prise selon la direction longitudinale X entre le plan médian E et une extrémité inférieure 27b de la pièce de maintien 18 d'une part et entre le plan médian E et une extrémité supérieure 27a de la pièce de maintien 18 d'autre part. On comprend ici que la première zone 112a, autrement appelée zone supérieure, s'étend entre le plan médian E et l'extrémité supérieure 27a et la deuxième zone 112b, dite zone inférieure, s'étend entre le plan médian E et l'extrémité inférieure 27b.

Dans sa généralité, et en se reportant sur les figures 5 à 16, la présente invention propose une pièce de maintien 18 qui est équipée d'une pièce intermédiaire 102 comportant un canal 109, le canal 109 étant pourvu de deux ouvertures 121, 122 et étant ménagé asymétriquement sur la pièce intermédiaire 102 par rapport à un plan médian H. La pièce intermédiaire 102 est rapportable sur le plateau 22 par l'intermédiaire d'un moyen de fixation 101 au moins de deux manières distinctes, de telle sorte que le canal 109 occupe diverses positions sur la pièce de maintien 18 le long de la direction longitudinale X.

Plus particulièrement, le plateau 22 est équipé avantageusement du moyen de fixation 101 de la pièce intermédiaire 102 sur le plateau 22. Le moyen de fixation 101 comprend une pluralité d'organes d'emboîtement 103, 103', 104, 107, 116.

Selon la première variante représentée sur les figures 5 à 12, le moyen de fixation 101 comprend au moins un jeu d'organes d'emboîtement 103, 103', tel qu'un premier jeu de cavités 103 et/ou un deuxième jeu de cavités 103', pour la réception d'un jeu d'organes d'emboîtement complémentaires 104, tels que des griffes 104, les cavités 103, 103' étant par exemple ménagées sur le plateau 22 et les griffes 104 étant ménagées sur la pièce intermédiaire 102. Les cavités 103, 103' d'une part et les griffes 104 d'autre part sont réparties respectivement sur le plateau 22 et sur la pièce intermédiaire 102 selon une géométrie identique. Sur l'exemple illustré, les cavités 103, 103' et les griffes 104 sont au nombre de quatre et sont réparties aux angles respectifs d'un quadrilatère identique pour permettre leur emboîtement entre eux. La position de ces cavités 103, 103' délimite une zone de réception 105 que la pièce intermédiaire 102 occupe, une fois montée sur la pièce de maintien 18.

Selon une première forme de réalisation illustrée sur les figures 4 à 6, le plateau 22 comprend un jeu unique de quatre cavités 103 de telle sorte que le plateau 22 offre une unique zone de réception 105 de la pièce intermédiaire 102.

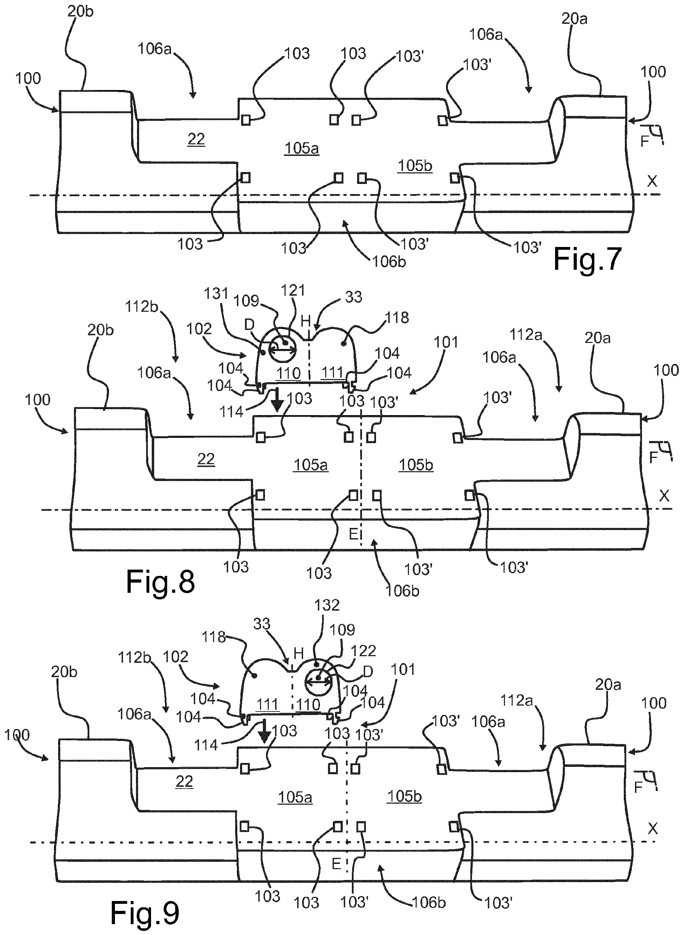

Selon une deuxième forme de réalisation illustrée sur les figures 7 à 12, le plateau comprend deux jeux de quatre cavités 103, 103' de telle sorte que le plateau 22 offre deux zones de réception 105a, 105b de la pièce intermédiaire 102.

Le plateau 22 est par exemple conformé en croix qui comporte deux branches 106a, 106b dont une première branche 106a qui s'étend longitudinalement en étant parallèle à la direction longitudinale X et une deuxième branche 106b qui s'étend latéralement en étant orthogonal à la direction longitudinale X. De préférence, les zones de réception 105, 105a, 105b sont situés au croisement des branches 106a, 106b.

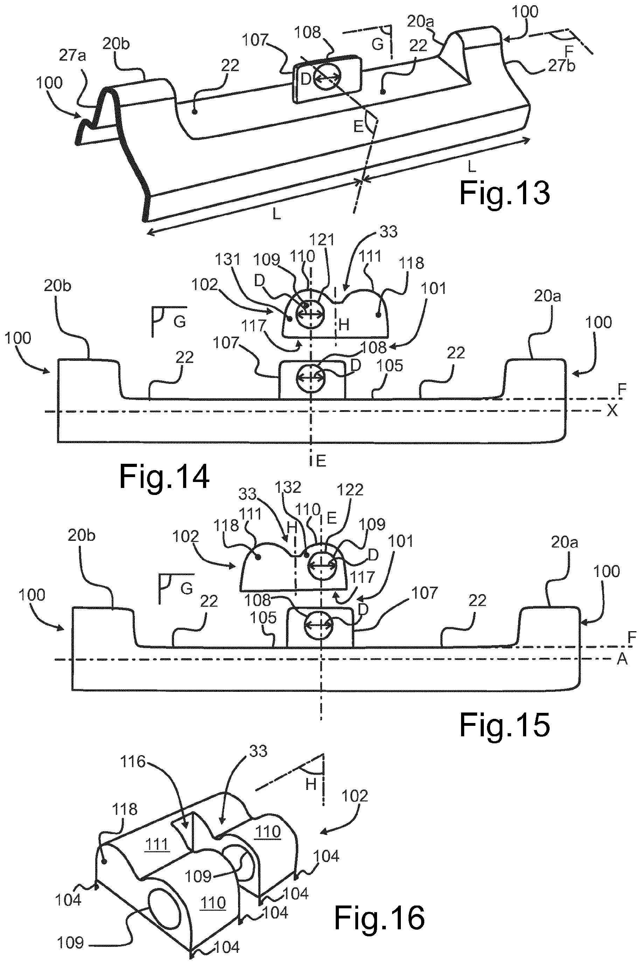

Selon la deuxième variante représentée sur les figures 13 à 16, le moyen de fixation 101 comprend une platine 107 équipant le plateau 22 qui est prévue pour s'imbriquer à l'intérieur d'une rainure 116 que comprend la pièce intermédiaire 102. La platine 107 est ménagée selon un plan de platine G qui est orthogonal au plan de plateau F. La platine 107 est placée au centre du plateau 22, à la fois selon la direction longitudinale X et selon la direction transversale Y, par exemple à l'intérieur d'une zone de réception 105. La platine 107 est pourvue d'un logement 108 qui est préférentiellement ménagé au centre de la pièce de maintien 18. Autrement dit, le logement 108 est ménagé symétriquement par rapport au plan transversal médian E de la pièce de maintien 18.

Selon la première et la deuxième variante, la pièce intermédiaire 102 comprend le canal 109 qui traverse la pièce intermédiaire 102 de part en part. Autrement dit, le canal 109 comporte une première ouverture 121 qui équipe une première face latérale 131 de la pièce intermédiaire 102 et le canal 109 comporte une deuxième ouverture 122 qui équipe une deuxième face latérale 132 de la pièce intermédiaire 102, le canal s'étendant depuis la première ouverture jusqu'à la deuxième ouverture 122. Il en résulte que le canal 109 débouche à travers la première face latérale 131 et à travers la deuxième face latérale 132. La première face latérale 131 et la deuxième face latérale 132 sont préférentiellement parallèles l'une à l'autre et parallèles à la direction longitudinale X. La première face latérale 131 et la deuxième face latérale 132 sont sécantes par rapport au plan de plateau F et par exemple orthogonales à ce dernier.

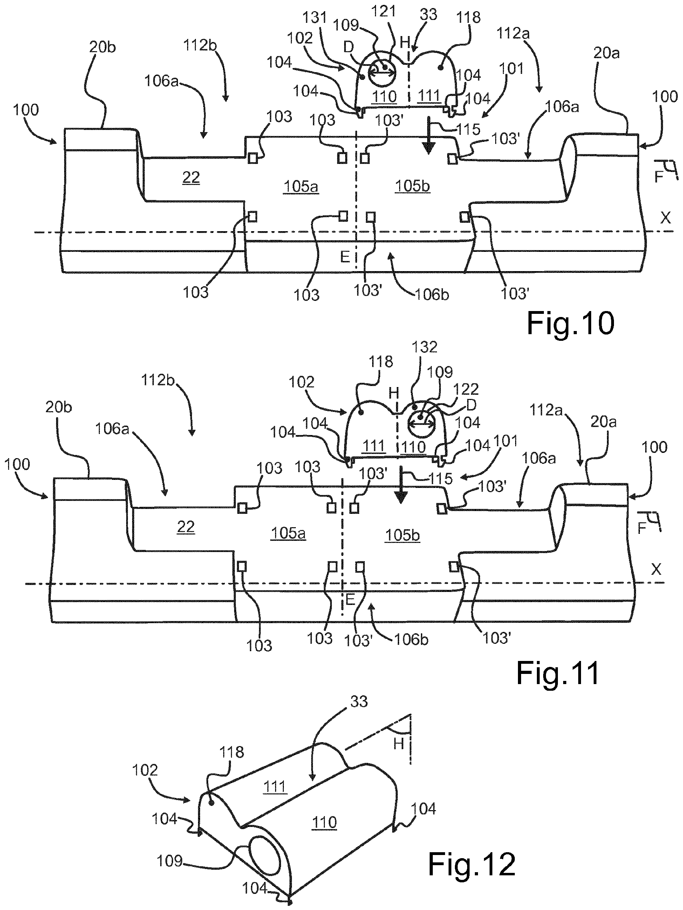

Comme illustré aux figures 12 et 16, la pièce intermédiaire 102 comporte un plan médian H qui sépare la pièce intermédiaire 102 en deux portions 110, 111, par exemple de même volume, dont une première portion 110 et une deuxième portion 111. La première portion 110 est avantageusement pourvue du canal 109 tandis que la deuxième portion 111 en est exempte.

En section, chacune de ces portions est concave, vue de la pièce de maintien 18. Ces deux portions sont ainsi de section identique et se joignent au niveau d'une rigole 33.

Selon la première variante représentée sur les figures 4 à 12, le plan médian H forme un plan de symétrie des organes complémentaires d'emboîtement 104, notamment les griffes qui équipent la pièce intermédiaire 102. Ces dispositions sont telles que la pièce intermédiaire 102 est positionnable de deux façons distinctes sur chaque zone de réception 105, 105a, 105b pour offrir une position respective au canal 109, lorsque les griffes 104 sont emboîtées à l'intérieur des cavités 103, 103' de la pièce de maintien 18. On notera qu'une paire de griffes est issue de la première portion 110 qui comprend le canal 109, alors que l'autre paire de griffe est issue de la deuxième portion.

Ainsi, sur les figures 5, 8 et 9, le canal 109 est positionnée à l'intérieur de la deuxième zone 112b de la pièce de maintien 18, cette deuxième zone 112b étant comprise entre le plan médian H et le capot supérieur 20a, tandis que sur les figures 6, 10 et 11, le canal 109 est positionnée à l'intérieur de la première zone 112a de la pièce de maintien 18, cette première zone 112a étant comprise entre le plan médian H et le capot supérieur 20b. Une fois rapporté sur la pièce de maintien 18, le plan médian H de la pièce intermédiaire 102 est confondu avec le plan transversal médian E de la pièce de maintien 18.

Sur les figures 5 et 6, ces dispositions sont atteintes à partir d'une mise en superposition 113 du plan médian H de la pièce intermédiaire 102 et du plan transversal médian E de la pièce de maintien 18, lors d'un mouvement de mise en place de la pièce intermédiaire 102 sur la zone de réception 105.

Sur les figures 5 et 6, on constate que la pièce intermédiaire 102 s'étend à la fois dans la première zone 112a et dans la deuxième zone 112b. La pièce intermédiaire 102 est ainsi à cheval sur ces deux zones. Dans l'exemple de la figure 5, la première portion 110 dans laquelle est ménagé le canal 109 s'étend dans la deuxième zone 112b, une face de mise en butée 118 étant quant à elle disposée dans la première zone 112a. Dans l'exemple de la figure 6, la première portion 110 dans laquelle est ménagé le canal 109 s'étend dans la première zone 112a, la face de mise en butée 118 étant quant à elle disposée dans la deuxième zone 112b. On comprend ici que la pièce intermédiaire 102 a été inversée entre la position de la figure 5 et la position de la figure 6.

Sur les figures 8 et 9, ces dispositions sont atteintes à partir d'une mise en position 114 des griffes 104 à l'intérieur du premier jeu de cavités 103. Selon l'une ou l'autre des positions possibles des griffes 104 de la pièce intermédiaire 102 à l'intérieur du premier jeu de cavités 103, le canal 109 occupe deux positions distinctes plus ou moins proches du plan médian E. Sur ces deux figures, la pièce intermédiaire 102 s'étend néanmoins intégralement dans la deuxième zone 112b délimitée par le plan transversal médian E.

Sur la figure 8, la position du canal 109 est éloignée du plan transversal médian E de la pièce de maintien 18 comparée à la position de ce même canal 109 sur la figure 9, ces deux positions étant néanmoins dans la deuxième zone 112b de la pièce de maintien 18. Ces dispositions permettent de monter le balai d'essuyage 1 en le décalant longitudinalement, de sorte à s'adapter à des dimensions de surface vitrée différentes au moyen d'un même balai d'essuyage 1 équipé d'un dispositif de connexion selon l'invention.

Sur les figures 10 et 11, ces dispositions sont atteintes à partir d'une mise en place 115 des griffes 104 à l'intérieur du deuxième jeu de cavités 103'. Selon l'une ou l'autre des positions possibles des griffes 104 de la pièce intermédiaire 102 à l'intérieur du deuxième jeu de cavités 103', le canal 109 occupe deux positions distinctes plus ou moins proches du plan médian E. Sur ces deux figures, la pièce intermédiaire 102 s'étend néanmoins intégralement dans la première zone 112a délimitée par le plan transversal médian E.

Sur la figure 10, la position du canal 109 est proche du plan transversal médian E de la pièce de maintien 18 comparée à la position de ce même canal 109 sur la figure 11, ces deux positions étant néanmoins dans la première zone 112a de la pièce de maintien 18. Ces dispositions permettent de monter le balai d'essuyage 1 en le décalant longitudinalement, de sorte à s'adapter à des dimensions de surface vitrée différentes au moyen d'un même balai d'essuyage 1 équipé d'un dispositif de connexion selon l'invention.

En se référant aux figures 8 à 11, la présente invention permet un positionnement du canal 109 selon quatre positions distinctes, le canal 109 étant dans les quatre positions d'utilisation positionné parallèlement au plan de plateau F et s'étendant selon la direction transversale Y.

Selon la deuxième variante représentée sur les figures 13 à 16, la pièce intermédiaire 102 comprend la rainure 116 pour la réception de la platine 107. La rainure 116 est ménagée selon un plan de rainure J qui est orthogonal au plan médian H de la pièce intermédiaire 102 et qui est sécant par rapport au canal 109. Préférentiellement, le plan de rainure J est orthogonal audit plan médian H. En position d'emboîtement de la platine 107 à l'intérieur de la rainure 116, le canal 109 et le logement 108 sont alignés, notamment lors d'une mise en butée d'une face inférieure 117 de la pièce intermédiaire 102 contre la zone de réception 105. De préférence, le canal 109 et le logement 108 sont d'un même diamètre D.

Le canal 109 selon la première variante, et le canal 109 et le logement 108 selon la deuxième variante, sont destinés à recevoir le doigt 15 de la partie de connexion 9, comme illustré sur la figure 2, de telle sorte que le balai d'essuyage 1 est rapporté sur le bras de manoeuvre 4 et peut pivoter par rapport à ce dernier. Pour ce faire, la pièce intermédiaire 102 comprend une face de mise en butée 118 contre laquelle vient en appui la languette 40 de la partie de connexion 9, cette face de mise en butée 118 étant réalisée par une portion de la première face latérale 131 disposée à côté du débouché du canal 109. Dans un tel cas, la deuxième face latérale 132 est mise en appui contre la première face 14a de la partie de connexion 9.

Quel que soit le mode de réalisation décrit ci-dessus, la pièce de maintien 18 et la pièce intermédiaire 102 sont réalisées par moulage d'une matière synthétique. La pièce de maintien 18 comprenant sa platine 107 ménagé sur le plateau 22 forme un ensemble monobloc, c'est-à-dire moulé en une seule opération et à partir d'une même matière synthétique, notamment un matériau polymère. Cet aspect demeure important car il permet de maintenir bas le coût de fabrication d'une telle partie de connexion.

Le positionnement de la pièce intermédiaire 102 sur l'une ou l'autre des zones de réception 105, 105a et 105b permet au balai d'essuyage 1 de la présente invention d'équiper avec un même balai d'essuyage un véhicule automobile à direction à droite ou bien un véhicule automobile à direction à gauche. En effet, ces dispositions permettent une mise en place optimisée du balai d'essuyage 1 sur la surface vitrée selon la direction du véhicule automobile à partir d'un choix judicieux de la pièce de maintien 18, d'un positionnement de la pièce intermédiaire 102 sur le plateau 22 et d'une introduction du doigt 15 à l'intérieur du canal 109 par l'intermédiaire de la première ouverture 121 ou de la deuxième ouverture 122.

Selon l'une quelconque des variantes et formes de réalisation décrites ci-dessus, le dispositif de connexion 2, notamment le système d'essuyage 5, comprend une enveloppe rigide ou semi-rigide qui est apte à recouvrir au moins le dispositif de connexion 2 et préférentiellement le dispositif de connexion 2 et la partie de connexion 9 pour protéger l'une et/ou l'autre de projections d'eau et/ou de salissures. L'enveloppe est notamment agencée en une demi-coquille qui forme une coque de protection du dispositif de connexion 2 au moins. De préférence, l'enveloppe est rapportée par clippage sur le dispositif de connexion 2, voire sur la tige du bras de manoeuvre. Ces dispositions visent à rendre pérenne le dispositif de connexion 2, le balai d'essuyage 1 et le système d'essuyage 5.

## Revendications

1. Dispositif de connexion (2) destiné à être interposé entre un bras de manoeuvre (4) et un balai d'essuyage (1) d'une surface vitrée d'un véhicule, comprenant une pièce de maintien (18) solidaire du balai d'essuyage (1) et une pièce intermédiaire (102) apte à être rapportée sur une partie de connexion (9) du bras de manoeuvre (4), dans lequel la pièce de maintien (18) s'étend dans une première zone (112a) et une deuxième zone (112b) délimitées par un plan transversal (E) de la pièce de maintien (18), la pièce intermédiaire (102) comprenant une première portion (110) et une deuxième portion (111), la première portion (110) étant pourvue d'un canal (109) apte à recevoir un doigt (15) que comporte la partie de connexion (9), **caractérisé par le fait que** le dispositif de connexion (2) comprend au moins un moyen de fixation (101) de la pièce intermédiaire (102) sur la pièce de maintien (18) configuré pour disposer le canal (109) soit dans la première zone (112a), soit dans la deuxième zone (112b).

2. Dispositif de connexion (2) selon la revendication 1, dans lequel la deuxième portion (111) est disposée dans la zone de la pièce de maintien (18) qui est opposée à la zone dans laquelle est disposé le canal (109).

3. Dispositif de connexion (2) selon la revendication 1, dans lequel la première portion (110) et la deuxième portion (111) sont disposées dans la même zone de la pièce de maintien (18).

4. Dispositif de connexion (2) selon la revendication 3, dans lequel la première portion (110) est plus proche du plan transversal (E) que la deuxième portion (111).

5. Dispositif de connexion (2) selon la revendication 3, dans lequel la première portion (110) est plus éloignée du plan transversal (E) que la deuxième portion (111).

6. Dispositif de connexion (2) selon l'une quelconque des revendications précédentes, dans lequel le plan transversal (E) est un plan transversal médian de la pièce de maintien (18).

7. Dispositif de connexion (2) selon l'une quelconque des revendications précédentes, dans lequel la pièce intermédiaire comprend un plateau (22) sur lequel est ménagé le moyen de fixation (101).

8. Dispositif de connexion (2) selon l'une quelconque des revendications précédentes, dans lequel le canal (109) comporte une première ouverture (121) qui équipe une première face latérale (131) de la pièce intermédiaire (102) et le canal (109) comporte une deuxième ouverture (122) qui équipe une deuxième face latérale (132) de la pièce intermédiaire (102).

9. Dispositif de connexion (2) selon l'une quelconque des revendications précédentes, dans lequel le moyen de fixation (101) comprend une pluralité d'organes complémentaires d'emboîtement (103, 103', 104, 107, 116).

10. Dispositif de connexion (2) selon la revendication 9, dans lequel le moyen de fixation (101) comprend au moins un jeu d'organes d'emboîtement (103, 103', 107) équipant un plateau (22) délimitant pièce de maintien (18) pour la réception d'un jeu d'organes d'emboîtement complémentaires (104, 116) équipant la pièce intermédiaire (102).

11. Dispositif de connexion (2) selon les revendications 9 ou 10, dans lequel le moyen de fixation (101) comprend au moins un jeu d'organes d'emboîtement (103) délimitant une zone de réception (105) de la pièce intermédiaire (102) sur la pièce de maintien (18).

12. Dispositif de connexion (2) selon la revendication 11, dans lequel le moyen de fixation (101) comprend deux jeux d'organes d'emboîtement (103, 103') délimitant deux zones de réception (105a, 105b) de la pièce intermédiaire (102).

13. Dispositif de connexion (2) selon l'une quelconque des revendications 10 à 12, dans lequel le jeu d'organes d'emboitement (103, 103') est constitué d'une pluralité de cavités tandis que le jeu d'organes d'emboîtement complémentaires (104) est constitué d'une pluralité de griffes, qui se logent dans les cavités.

14. Dispositif de connexion (2) selon l'une quelconque des revendications 1 à 8, dans lequel le moyen de fixation (101) comprend une platine (107) issue d'un plateau (22) délimitant la pièce de maintien (18) et une rainure (116) ménagée dans la pièce intermédiaire (102), ladite platine (107) étant agencée pour s'imbriquer à l'intérieur de la rainure (116).

15. Dispositif de connexion (2) selon la revendication 14, dans lequel la platine (107) est pourvue d'un logement (108).

16. Dispositif de connexion (2) selon la revendication 15, dans lequel le logement (108) et le canal (109) sont conformés en un cylindre d'un diamètre (D) qui est égal à un diamètre (D) du doigt (15).

17. Dispositif de connexion (2) selon l'une quelconque des revendications 1 à 16, dans lequel chaque extrémité de la pièce de maintien (18) est munie d'un capot (20a, 20b) apte à couvrir une extrémité d'un déflecteur d'air (6) du balai d'essuyage (1).

18. Balai d'essuyage (1) équipé d'un dispositif de connexion (2) selon l'une quelconque des revendications précédentes.

19. Système d'essuyage (5) comprenant le balai d'essuyage (1) selon la revendication 18 et un bras de manoeuvre (4) pourvu d'une partie de connexion (9), ladite partie de connexion (9) comprenant un corps (12) équipé d'un doigt (15) et d'une broche (16) qui sont ménagés parallèlement entre eux et qui s'étendent selon une direction transversale (Y), le doigt (15) étant logé dans le canal (109) alors que la broche est en appui contre une face latérale délimitant la pièce intermédiaire (102).

## Patentansprüche

1. Verbindungsvorrichtung (2), die dazu bestimmt ist, zwischen einem Betätigungsarm (4) und einem Wischblatt (1) einer verglasten Fläche eines Fahrzeugs angeordnet zu werden, umfassend ein fest mit dem Wischblatt (1) verbundenes Halteteil (18) und ein Zwischenteil (102), das geeignet ist, an einem Verbindungsteil (9) des Betätigungsarms (4) angebracht zu werden, wobei sich das Halteteil (18) in einem ersten Bereich (112a) und einem zweiten Bereich (112b) erstreckt, die durch eine Querebene (E) des Halteteils (18) begrenzt sind, wobei das Zwischenteil (102) einen ersten Abschnitt (110) und einen zweiten Abschnitt (111) umfasst, wobei der erste Abschnitt (110) mit einem Kanal (109) versehen ist, der zur Aufnahme eines Fingers (15) geeignet ist, den der Verbindungsteil (9) aufweist, **dadurch gekennzeichnet, dass** die Verbindungsvorrichtung (2) mindestens ein Mittel (101) zur Befestigung des Zwischenteils (102) am Halteteil (18) umfasst, wobei das Befestigungsmittel dazu ausgebildet ist, den Kanal (109) im ersten Bereich (112a) oder im zweiten Bereich (112b) anzuordnen.

2. Verbindungsvorrichtung (2) nach Anspruch 1, wobei der zweite Abschnitt (111) im Bereich des Halteteils (18) angeordnet ist, der dem Bereich gegenüberliegt, in dem der Kanal (109) angeordnet ist.

3. Verbindungsvorrichtung (2) nach Anspruch 1, wobei der erste Abschnitt (110) und der zweite Abschnitt (111) im selben Bereich des Halteteils (18) angeordnet sind.

4. Verbindungsvorrichtung (2) nach Anspruch 3, wobei der erste Abschnitt (110) der Querebene (E) näher liegt als der zweite Abschnitt (111).

5. Verbindungsvorrichtung (2) nach Anspruch 3, wobei der erste Abschnitt (110) weiter von der Querebene (E) entfernt ist als der zweite Abschnitt (111).

6. Verbindungsvorrichtung (2) nach einem der vorhergehenden Ansprüche, wobei die Querebene (E) eine mittlere Querebene des Halteteils (18) ist.

7. Verbindungsvorrichtung (2) nach einem der vorhergehenden Ansprüche, wobei das Zwischenteil ein Plateau (22) umfasst, auf dem das Befestigungsmittel (101) angeordnet ist.

8. Verbindungsvorrichtung (2) nach einem der vorhergehenden Ansprüche, wobei der Kanal (109) eine erste Öffnung (121) aufweist, mit der eine erste Seitenfläche (131) des Zwischenteils (102) ausgestattet ist, und der Kanal (109) eine zweite Öffnung (122) aufweist, mit der eine zweite Seitenfläche (132) des Zwischenteils (102) ausgestattet ist.

9. Verbindungsvorrichtung (2) nach einem der vorhergehenden Ansprüche, wobei das Befestigungsmittel (101) eine Vielzahl von komplementären Aufsteckgliedern (103, 103', 104, 107, 116) umfasst.

10. Verbindungsvorrichtung (2) nach Anspruch 9, wobei das Befestigungsmittel (101) mindestens einen Satz Aufsteckglieder (103, 103', 107) umfasst, mit dem ein Plateau (22) ausgestattet ist, das das Halteteil (18) begrenzt, zur Aufnahme eines komplementären Satzes Aufsteckglieder (104, 116), mit dem das Zwischenteil (102) ausgestattet ist.

11. Verbindungsvorrichtung (2) nach Anspruch 9 oder 10, wobei das Befestigungsmittel (101) mindestens einen Satz Aufsteckglieder (103) umfasst, der einen Aufnahmebereich (105) des Zwischenteils (102) auf dem Halteteil (18) begrenzt.

12. Verbindungsvorrichtung (2) nach Anspruch 11, wobei das Befestigungsmittel (101) zwei Sätze Aufsteckglieder (103, 103') umfasst, die zwei Aufnahmebereiche (105a, 105b) des Zwischenteils (102) begrenzen.

13. Verbindungsvorrichtung (2) nach einem der Ansprüche 10 bis 12, wobei der Satz Aufsteckglieder (103, 103') aus einer Vielzahl von Hohlräumen besteht, während der Satz komplementärer Aufsteckglieder (104) aus einer Vielzahl von Klauen besteht, die in die Hohlräume eingreifen.

14. Verbindungsvorrichtung (2) nach einem der Ansprüche 1 bis 8, wobei das Befestigungsmittel (101) eine Platte (107), die aus einem Plateau (22) hervorgeht, das das Halteteil (18) begrenzt, und eine im Zwischenteil (102) ausgeführte Nut (116) umfasst, wobei die Platte (107) dazu ausgeführt ist, in das Innere der Nut (116) einzugreifen.

15. Verbindungsvorrichtung (2) nach Anspruch 14, wobei die Platte (107) mit einer Aufnahme (108) versehen ist.

16. Verbindungsvorrichtung (2) nach Anspruch 15, wobei die Aufnahme (108) und der Kanal (109) als ein Zylinder mit einem Durchmesser (D) ausgebildet sind, der gleich einem Durchmesser (D) des Fingers (15) ist.

17. Verbindungsvorrichtung (2) nach einem der Ansprüche 1 bis 16, wobei jedes Ende des Halteteils (18) mit einer Haube (20a, 20b) versehen ist, die zum Abdecken eines Endes des Windleitprofils (6) des Wischblatts (1) geeignet ist.

18. Wischblatt (1), das mit einer Verbindungsvorrichtung (2) nach einem der vorhergehenden Ansprüche ausgerüstet ist.

19. Wischsystem (5), umfassend das Wischblatt (1) nach Anspruch 18 und einen Betätigungsarm (4), der mit einem Verbindungsteil (9) versehen ist, wobei der Verbindungsteil (9) einen Körper (12) umfasst, der mit einem Finger (15) und einem Stift (16) ausgerüstet ist, die parallel zueinander angeordnet sind und sich in einer Querrichtung (Y) erstrecken, wobei der Finger (15) im Kanal (109) aufgenommen ist, während der Stift an einer das Zwischenteil (102) begrenzenden Seitenfläche anliegt.

## Claims

1. Connecting device (2) intended to be interposed between an operating arm (4) and a wiper (1) for a glazed surface of a vehicle, comprising a holding piece (18) secured to the wiper (1) and an intermediate piece (102) that is able to be attached to a connecting part (9) of the operating arm (4), wherein the holding piece (18) extends in a first region (112a) and a second region (112b) that are delimited by a transverse plane (E) of the holding piece (18), the intermediate piece (102) comprising a first portion (110) and a second portion (111), the first portion (110) being provided with a passage (109) that is able to receive a finger (15) belonging to the connecting part (9), **characterized in that** the connecting device (2) comprises at least one fastening means (101) for fastening the intermediate piece (102) to the holding piece (18), said fastening means (101) being configured to position the passage (109) either in the first region (112a) or in the second region (112b).

2. Connecting device (2) according to Claim 1, wherein the second portion (111) is disposed in the region of the holding piece (18) which is on the opposite side from the region in which the passage (109) is disposed.

3. Connecting device (2) according to Claim 1, wherein the first portion (110) and the second portion (111) are disposed in the same region of the holding piece (18).

4. Connecting device (2) according to Claim 3, wherein the first portion (110) is closer to the transverse plane (E) than the second portion (111).

5. Connecting device (2) according to Claim 3, wherein the first portion (110) is further away from the transverse plane (E) than the second portion (111).

6. Connecting device (2) according to any one of the preceding claims, wherein the transverse plane (E) is a median transverse plane of the holding piece (18).

7. Connecting device (2) according to any one of the preceding claims, wherein the intermediate piece comprises a plate (22) on which the fastening means (101) is formed.

8. Connecting device (2) according to any one of the preceding claims, wherein the passage (109) has a first opening (121) with which a first side face (131) of the intermediate piece (102) is equipped and the passage (109) has a second opening (122) with which a second side face (132) of the intermediate piece (102) is equipped.

9. Connecting device (2) according to any one of the preceding claims, wherein the fastening means (101) comprises a plurality of complementary interlocking members (103, 103', 104, 107, 116).

10. Connecting device (2) according to Claim 9, wherein the fastening means (101) comprises at least one set of interlocking members (103, 103', 107) with which a plate (22) that delimits the holding piece (18) is equipped, for receiving a set of complementary interlocking members (104, 116) with which the intermediate piece (102) is equipped.

11. Connecting device (2) according to Claim 9 or 10, wherein the fastening means (101) comprises at least one set of interlocking members (103) that delimit a receiving region (105) for receiving the intermediate piece (102) on the holding piece (18).

12. Connecting device (2) according to Claim 11, wherein the fastening means (101) comprises two sets of interlocking members (103, 103') that delimit two receiving regions (105a, 105b) for receiving the intermediate piece (102).

13. Connecting device (2) according to any one of Claims 10 to 12, wherein the set of interlocking members (103, 103') is made up of a plurality of cavities, while the set of complementary interlocking members (104) is made up of a plurality of claws which are accommodated in the cavities.

14. Connecting device (2) according to any one of Claims 1 to 8, wherein the fastening means (101) comprises a mounting plate (107) which protrudes from a plate (22) that delimits the holding piece (18), and a slot (116) formed in the intermediate piece (102), said mounting plate (107) being designed to slot into the slot (116).

15. Connecting device (2) according to Claim 14, wherein the mounting plate (107) is provided with a housing (108).

16. Connecting device (2) according to Claim 15, wherein the housing (108) and the passage (109) are in the shape of a cylinder having a diameter (D) which is equal to a diameter (D) of the finger (15).

17. Connecting device (2) according to any one of Claims 1 to 16, wherein each end of the holding piece (18) is provided with a shroud (20a, 20b) that is able to cover one end of an air deflector (6) of the wiper (1).

18. Wiper (1) equipped with a connecting device (2) according to any one of the preceding claims.

19. Wiping system (5) comprising the wiper (1) according to Claim 18 and an operating arm (4) provided with a connecting part (9), said connecting part (9) comprising a body (12) equipped with a finger (15) and with a clip (16) which are formed parallel to one another and which extend in a transverse direction (Y), the finger (15) being accommodated in the passage (109) while the clip bears against a side face that delimits the intermediate piece (102).
